# EUROPEAN PATENT SPECIFICATION

(11) **EP 2 972 563 B1**
(45) Date of publication and mention of the grant of the patent: **09.05.2018**
(21) Application number: 14768343.7
(22) Date of filing: 14.03.2014
(51) Int. Cl.: B42D 25/324, B42D 25/425, G02B 27/10, G02B 27/22, G02B 27/44

(54) **VARIABLE DEVICE EXHIBITING NON-DIFFRACTIVE THREE-DIMENSIONAL OPTICAL EFFECT**
VARIABLE VORRICHTUNG MIT EINEM NICHTBRECHENDEN DREIDIMENSIONALEN OPTISCHEN EFFEKT
DISPOSITIF VARIABLE PRÉSENTANT UN EFFET OPTIQUE TRIDIMENSIONNEL NON DIFFRACTIF

(30) Priority: 15.03.2013 US 201361787313 P
(43) Date of publication of application: 20.01.2016
(73) Proprietor: OpSec Security Group, Inc., Denver, CO 80202 (US)
(72) Inventor: DUNN, Paul, Thurcaston Leicestershire LE7 7JR (GB); ROWE, Andrew, Tilton on the Hill Leicestershire LE7 9DE (GB)
(74) Representative: Serjeants LLP
(86) International application number: PCT/US2014/026972
(87) International publication number: WO 2014/152119

(56) References cited:
- WO-A1-2011/079347
- WO-A1-2012/048847
- DE-A1-102005 061 749
- US-A- 5 032 003
- US-B1- 6 266 187
- US-B1- 6 266 187
- US-B2- 8 120 855

## Description

### BACKGROUND

### Field

The disclosed concept relates generally to optically variable devices and, more particularly, to an optically variable device that exhibits non-diffractive three-dimensional optical effects.

### Description of Related Art

An optically variable device (OVD) is a visual device that creates a change or shift in appearance, such as, for example and without limitation, a change in color, when observed from different relative observation points or when the illuminating light changes to a different angle of incidence. The evolution of the OVD as a security device stems largely from the search for a mechanism to resist counterfeiting of certain articles and products, or alternatively to render such copying obvious. For example, and without limitation, paper money, banknotes, certificates, tax stamps, security labels, product hang tags, drivers' licenses, ID cards, and credit cards, among other things, frequently employ one or more OVD's to resist counterfeiting or to verify authenticity.

U.S. Patent No. 6,266,187 discloses a substrate that exhibits a non-diffractive three-dimensional optical effect. The substrate includes stereo pairs of elements formed on the substrate that reflect or refract light to a focal point that is spaced apart from the surface of the substrate. This creates a point image at the focal point that is visible to a viewer. By using multiple stereo pairs of elements, a three-dimensional image is formed.

In U.S. Patent No. 6,266,187, the stereo pairs of elements only include a straight angled reflecting surface or a semi-circular shaped reflecting element. As such, the range of optically variable effects that can be provided is limited.

Notwithstanding the advancements disclosed in U.S. Patent No. 6,266,187, the continuous introduction of additional unique effects is needed to stay ahead of the counterfeiters' ability to simulate OVD technologies. Thus, there is still a need for an OVD that provides discernible optical features, but is difficult for a counterfeiter to duplicate or simulate.

It is an object of the present disclosure, therefore, to satisfy this need by providing an OVD that provides strong, stable, and easily discernible optical effects. It is a further object of the present disclosure to satisfy this need by providing an OVD that is more difficult to copy or simulate than the prior art, and thus to provide a security device with a higher level of security.

WO 2012/048847 A1 discloses an OVD comprising a substrate having a surface region containing a plurality of optical elements. The OVD is designed to produce, when illuminated, a light spot image consisting of a plurality of light spots that appear to the observer to be suspended above or below the surface region, and are arranged in the form of a pre-determined pattern. WO 2011/079347 A1 discloses an OVD including a plurality of relief elements applied to a surface that collectively generate an image.

### SUMMARY OF THE INVENTION

These needs and others are met by embodiments of the disclosed concept, which provides an OVD capable of providing various non-diffractive three-dimensional optical effects.

In accordance with aspects of the disclosed concept, an optically variable device is disclosed in claim 1. Optional or non-essential features of the optically variable device are disclosed in the sub-claims.

### BRIEF DESCRIPTION OF THE DRAWINGS

A full understanding of the disclosed concept can be gained from the following description of the preferred embodiments when read in conjunction with the accompanying drawings in which:
FIG. 1 is an isometric view of an OVD including recessed optical elements in accordance with an embodiment of the disclosed concept;
FIG. 2 is a top view of an OVD including an array of optical elements in accordance with an embodiment of the disclosed concept;
FIG. 3 is a cross-sectional view of a shallow curved recessed optical element in accordance with an embodiment of the disclosed concept;
FIG. 4 is a cross-sectional view of a deep curved recessed optical element in accordance with an embodiment of the disclosed concept;
FIG. 5 is a cross-sectional view of a shallow ridge optical element in accordance with an embodiment of the disclosed concept;
FIG. 6 is a cross-sectional view of an optical element that is a ridge with a large curvature in accordance with an embodiment of the disclosed concept;
FIG. 7 is a cross-sectional view of an asymmetric optical element in accordance with an embodiment of the disclosed concept;
FIGS. 8 and 9 are views of substrates including optical elements in accordance with embodiments of the disclosed concept; and
FIG. 10 is a cross-sectional view of an optical element including a micro-patterned surface in accordance with the invention as defined in claim 1.

### DESCRIPTION OF THE PREFERRED EMBODIMENTS

As employed herein, the term "optically variable device" (OVD) is used in its conventional broad sense and includes devices comprising a single optical element alone or multiple optical elements arranged so that they may or may not be touching each other, overlapping, or physically in close proximity to each other.

A "security device" as employed herein, refers to any known or suitable device which employs one or more OVD's in order to verify the authenticity of the article on which the security device is disposed, and to deter and resist copying or counterfeiting of the article.

As employed herein, the term "article" refers to an item or product on which the exemplary OVD, or security device comprising the OVD, is employed, and expressly includes, without limitation, articles used in high-security, banking, identification, and brand protection markets, such as, for example, identification cards, credit cards, debit cards, smart cards, organization membership cards, security system cards, security entry permits, banknotes, checks, fiscal tax stamps, passport laminates, legal documents, packaging labels and other information-providing articles wherein it may be desirable to validate the authenticity of the article and/or to resist alternation, tampering or reproduction thereof.

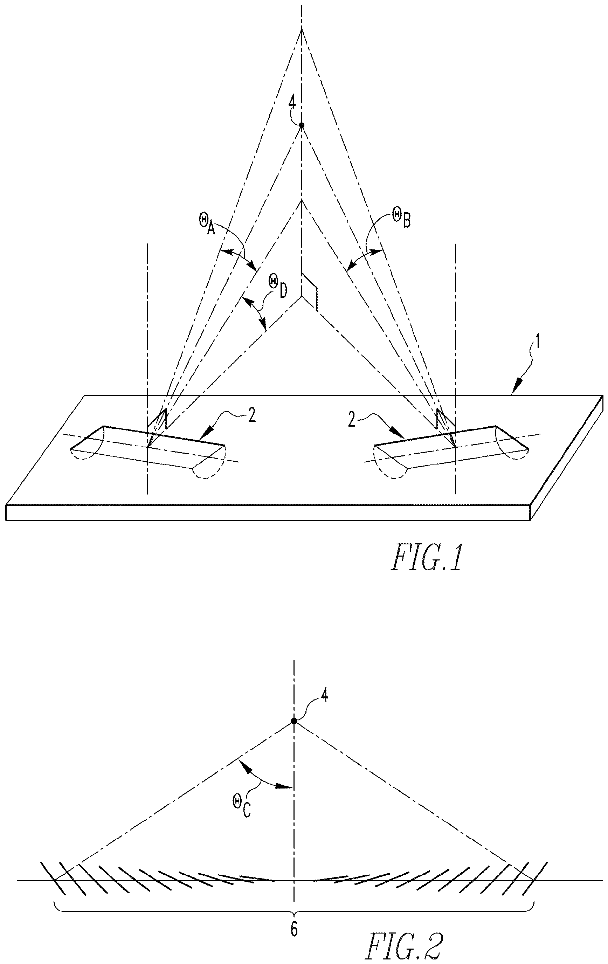

FIG. 1 is an isometric view of an OVD in accordance with an embodiment of the disclosed concept. The OVD includes a substrate 1 with optical elements 2 formed in its surface. The optical elements 2 are recessed structures such as curved profile grooves formed in the substrate 1 of FIG. 1. However, it is contemplated that optical elements have various profile shapes, some of which will be described in this disclosure, may be employed without departing from the scope of the disclosed concept. The optical elements 2 form a stereo pair that is structured to reflect incident light toward a focal point 4.

The focal point 4 is disposed at a location apart from the surface of the substrate 1. FIG. 1 illustrates how the location of the focal point 4 is controlled based on the location and orientation of the optical elements 2. In more detail, FIG. 1 shows lines extending along the surface of the substrate 1 perpendicular to the elongated axes of the optical elements 2. The focal point 4 is located directly above the intersection of these lines.

A viewer viewing the OVD is able to see a point image at the location of the focal point 4 when the OVD is viewed from a limited range of angles of elevation. The angle of elevation is between the surface of the OVD and the viewpoint of the viewer. The range of angles of elevation at which the point image is visible is based on the cross-sectional profile shapes of the optical elements 2. In more detail, the cross-sectional profile shape of an optical element has an associated angle of divergence θ_{A} and θ_{B} and angle of elevation θ_{D}. Changing the cross-sectional shape of an optical element can cause the associated angles of divergence and elevation to change. In the OVD of FIG. 1, the optical elements 2 have associated angles of divergence of θ_{A} and θ_{B}, respectively. The intersection of these angles of divergence determines the range of angles of elevation over which the point image is visible to a viewer. That is, when the OVD is viewed from an angle of elevation outside the intersection of the ranges of divergent angles associated with the optical elements 2, the point image will not be visible.

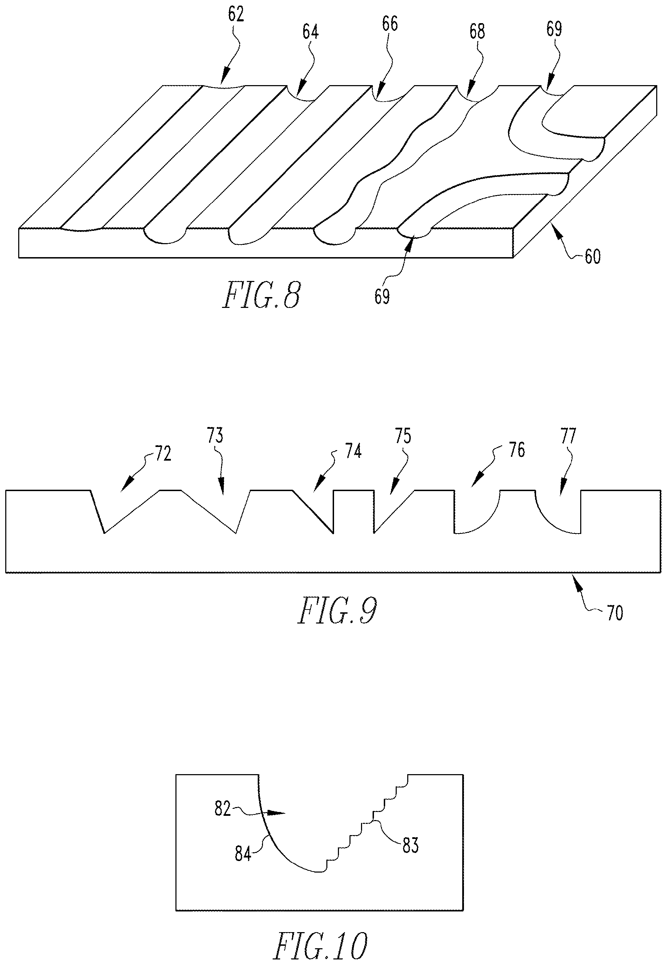

The point image formed by the optical elements 2 creates a non-diffractive three-dimensional optical effect. The effect is non-diffractive because it is caused by light being reflected, rather than diffracted, from the optical elements 2. Thus, the point image will generally appear the same color as the light incident on the OVD (i.e., an achromatic effect). According to the invention a micro-patterned surface is employed to control the color of the point image as will be described in more detail with respect to FIG. 10. The size of the optical elements 2 and the spacing between the optical elements 2 is preferably selected so that diffractive effects are not caused unintentionally.

In the OVD of FIG. 1, only one stereo pair of optical elements 2 is shown. However, it is contemplated that multiple stereo pairs of optical elements 2 will be used on an OVD to create multiple point images that together form a non-diffractive three-dimensional optical effect such as one or more optically variable three-dimensional images.

FIG. 2 is a top view of an OVD including an array of optical elements 6 in accordance with an embodiment of the disclosed concept. As was previously described with respect to FIG. 1, the range of angles of incidence at which the point image is visible is based on the cross-sectional shape of the optical elements. However, the point image associated with a stereo pair of optical elements is also only visible within a limited range of rotational angles (i.e., the angle the OVD is rotated side to side). two extend this range, the optical elements may be spread further apart. However, this can diminish the intensity of the point image.

As shown in FIG. 2, an array of stereo pairs of optical elements 6 are each positioned and oriented such that they share the same focal point 4. This extends the range of rotational angles in which the point image is visible to 2*θ_{C} without diminishing its intensity. Furthermore, the cross-sectional profile shapes of the individual optical elements in the array of optical elements 6 can be controlled to cause various effects as the OVD is rotated. For example, the point image may disappear and reappear to a viewer at a given angle of elevation when the OVD is rotated through a range of rotation angles. The same point image may also remain visible through the same range of rotation angles when viewed from a different angle of elevation. Other effects such as color effects associated with ranges of rotational angles and angles of elevation may also be created by controlling the cross-sectional profile shapes of individual optical elements.

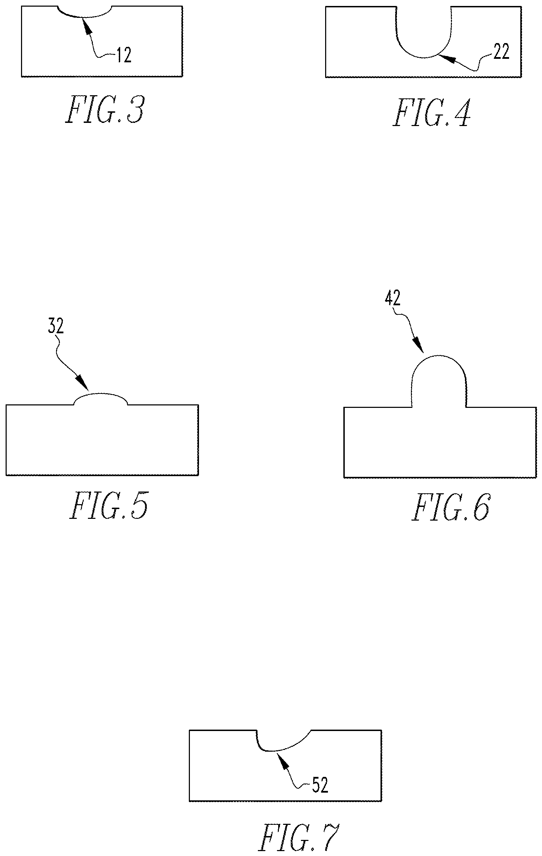

Referring to FIG. 3, a cross-sectional view of an optical element 12 in accordance with an embodiment of the disclosed concept is shown. The optical element 12 has a cross-sectional profile shape that is a shallow recessed curve. The curvature of the shallow recessed curve is less than that of a semi-circular profile shape. The shallow recessed curve cross-sectional profile shape has an associated range of angles of divergence that is narrower than the associated range of angles of divergence for a semi-circular cross-sectional profile shape. As such, a point image associated with optical element 12 would only be visible for a narrow range of angles of elevation. Additionally, the point image associated with the optical element 12 would have a higher intensity than a point image associated with an optical element having a semi-circular cross-sectional profile shape would have.

Generally speaking, as the curvature of the cross-sectional profile shape of an optical element increases, the range of angles of elevation in which the associated point image is visible increases and the intensity of the associated point image decreases. It is contemplated that an OVD may employ stereo pairs of optical elements having different curvatures to control the three-dimensional optical effect. For example, optical elements having a small curvature can be used to create one portion of a three-dimensional image, and that portion would only be viewable from points within a narrow range of angles of elevation. Optical elements having a larger curvature can then be used to create the rest of the three-dimensional images, which would then be viewable from points within a larger range of angles of elevation. Having a certain portion of the three-dimensional image only becoming visible within a certain range of angles of elevation, or having different three-dimensional images visible within different ranges of angles of elevation, can be used as a security feature of the OVD.

FIG. 4 is a cross-sectional view of another optical element 22 in accordance with an embodiment of the disclosed concept. The optical element 22 has a cross-sectional profile shape that is a deep curved recess that has a curvature that is greater than the curvature of a semi-circular cross-sectional profile shape. Thus, a point image associated with the optical element 22 would be visible from a larger range of angles of elevation than a point image associated with an optical element that has a semi-circular cross-sectional profile shape. Also, the intensity of the point image associated with the optical element 22 would be lower than the intensity of the point image associated with the optical element having a semi-circular cross-sectional profile shape.

FIG. 5 is a cross-sectional view of an optical element 32 that has a shallow ridge cross-sectional profile shape. The shallow ridge cross-sectional profile shape has a curvature that is less than that of a semi-circular ridge. The optical element 32 with the shallow ridge cross-sectional profile shape, similar to the optical element 12 with the shallow recess cross-sectional profile shape of FIG. 1, has an associated point image that is visible from a narrow range of angles of elevation and has a high intensity.

FIG. 6 is a cross-sectional view of an optical element 42 that has a cross-section profile shape that is a ridge having a higher curvature than a semi-circular shaped ridge. The optical element 42, similar to the optical element 22 of FIG. 4, has an associated point image that is visible from a wide range of angles of elevation and has a low intensity.

FIG. 7 is a cross-sectional view of an optical element 52 that has an asymmetric cross-sectional profile shape. That is, the curvature or angle of one side of the cross-sectional profile shape of one side of the optical element 52 is different than the curvature or angle of the other side of the cross-sectional profile shape of the optical element 52. When an OVD including a stereo pair of the asymmetric optical elements 52 is viewed from one direction, the point image associated with the optical elements 52 is visible from one range of angles of elevation and has an associated intensity. Then, when the OVD is rotated 180°, the point image is visible from a different range of angles of elevation and has a different associated intensity. In other words, the point image associated with the optical elements 52 will have a divergence of light that will vary over its angle of view such that it will be seen as bright from one side and darker from the other, and when the OVD is rotated 180°, the point image is visible from a reversed asymmetrical optical element such that variation of the image point from bright to dark will be reversed. Thus, the asymmetric optical elements 52 can be used to create an effect such as causing portions of the three-dimensional image to disappear, brighten, or darken when the OVD is rotated 180°. While one type of asymmetrical optical element 52 is shown in FIG. 7, it is contemplated that any asymmetrically shaped optical element may be employed without departing from the scope of the disclosed concept.

FIG. 8 is an isometric view of a substrate 60 in accordance with an embodiment of the disclosed concept. The substrate 60 includes examples of a number of optical elements 62, 64, 66, 68, 69. One optical element 62 is a shallow curved recess similar to the optical element 12 of FIG. 3. Another optical element 64 is a curved recess that has a semi-circular shape. Another optical element 66 has an asymmetric profile shape similar to the optical dement 52 of FIG. 7.

The optical elements 62, 64, 66 each are formed as grooves having straight edges. However, the straight edges of the grooves can cause a diffractive effect. Optical element 68 has non-uniform edges which reduce or eliminate the diffractive effect. It is contemplated that non-uniform edges can be employed with any of the optical elements disclosed herein without departing from the scope of the disclosed concept. It is also contemplated that the optical elements described herein are not limited to straight grooves or ridges, but instead can take any desired shape, such as the optical elements 69 that are formed as curved grooves in the substrate 60.

FIG. 9 is a cross-sectional view of a substrate 70 in accordance with an embodiment of the disclosed concept. The substrate 70 includes examples of optical elements 72, 73, 74, 75, 76 formed in the substrate 70. The optical elements 72, 73, 74, 75, 76 are further example of asymmetrical optical elements 72, 73, 74, 75, 76 that can be used to control the angles of divergence at which their corresponding point images are visible.

FIG. 10 is a cross-sectional view of an optical element 82 that has a cross-sectional profile shape that includes a micro-patterned surface 83. The micro-patterned surface 83 is a series of horizontal planes spaced by a vertical distance. The micro-patterned surface 83 causes constructive interference for certain wavelengths of light and destructive interference for other wavelengths of light based on the vertical distance between the horizontal planes. In more detail, for light whose wavelength is an even multiple of ¼ of the vertical distance between the horizontal planes, the micro-patterned surface 83 will cause constructive interference, and for light whose wavelength is an odd multiple of ¼ of the vertical distance between the horizontal planes, the micro-patterned surface will cause destructive interference. As such, for white light (i.e., polychromatic light), the micro-patterned surface 83 will reflect the various wavelengths of the polychromatic light at various intensities. The reflected light therefore has a spectral color response with a peak color defined by the vertical distance between the horizontal planes. Such a structure acts as a wavelength filter and as the number of horizontal plane increases, the bandwidth of the reflected spectrum decreases so that a narrower band of color is seen.

The horizontal planes of the micro-patterned surface 83 may be created by partial exposure of a suitable substrate material using a method such as, for example and without limitation, laser engraving, electron beam lithography, ion beam etching, or etching, such as, chemical or plasma etching. The horizontal planes of the micro-patterned surface 83 may also be created using growth methods such as, for example and without limitation, nano-metallization or electroforming. It is also contemplated that the vertical distances between the horizontal planes may be irregular and may be made by, for example and without limitation, successively increasing or decreasing adjacent plane heights.

Vertical distances between horizontal planes in micro-patterned surfaces 83 may be controlled to produce varied and controllable color effects such as, for example and without limitation, pastel color effects, directional color effects, and color switching effects. According to the invention micro-patterned surfaces 83 are employed in combination with any of the optical elements described herein to create a three-dimensional image. Adding micro-patterned surfaces 83 allows color effects such as those described herein which are visible for certain parts of the image or at certain angles of view.

The vertical distance between the horizontal planes of the micro-patterned surface can be achieved by any suitable structure. In FIG. 10, the vertical distance between the horizontal planes is achieved by employing substantially vertical surfaces that have slightly curved corners. However, it is contemplated that a suitable surface such as a vertical, angled, or curved surface may be employed without departing from the scope of the disclosed concept.

The cross-sectional profile shape of the optical element 82 includes the angled micro-patterned surface 83 and a curved surface 84. The disclosed concept is not limited thereto. It is contemplated that the micro-patterned surface 83 may be employed to any or all portions of an optical element without departing from the scope of the disclosed concept. It is also contemplated that the micro-patterned surface 83 may be employed on any shape of optical element surface without departing from the scope of the disclosed concept. For example, in FIG. 10 the micro-patterned surface 83 is formed on an angled surface, but it is contemplated that other surfaces such as, without limitation, surfaces having different angles, curved surfaces, or asymmetric surfaces may be micro-patterned without departing from the scope of the disclosed concept. It is further contemplated that the disclosed concept is not limited to the curved surface 84 shown in FIG. 10. It is contemplated that the curved surface 84 may be replaced by, without limitation, an angled surface, a vertical surface, or any type of micro-patterned surface without departing from the scope of the disclosed concept.

It is contemplated that any of the optical elements described herein, or any combinations or variations thereof, may be employed in an OVD to create a non-diffractive three-dimensional optical effect.

It is contemplated that the optical elements described herein may be produced by any suitable method by the removal of or by the addition of material. Optical elements formed by the addition of material, for example and without limitation, the ridge shaped optical elements 32,42 of FIGS. 5 and 6, may be created by the deposition of ridges of reflecting material onto a substrate. For example and without limitation, the optical elements may be formed by the application of a reflective material by any of several print processes known in the art that is capable of forming the shape and size of element needed to produce the wanted optical pattern or image. Print methods such as gravure, offset, lithography, ink-jet and laser printing may be usefully employed, for example. Other additive techniques that may be used may include, for example and without limitation, vapor deposition in a vacuum, coating a pattern by use of a mask, and three-dimensional printing.

Optical elements formed by the removal of material, for example and without limitation, the recessed-type optical elements 12, 22, 52 of FIGS. 3,4, and 7, may be formed as surface relief structures (grooves or ridges of any length) in the surface of the substrate by any of various removal means known in the art. For example and without limitation, the optical elements may be formed by coating a substrate with a photo-sensitive resin; optically recording the reflector pattern or image into the resin; and processing the exposed photo-sensitive resin by chemical etching to form a surface relief pattern. The optical elements may also be formed using an analog process such as a mask, or a digital process such as one using a scanning electron beam or laser device, for example. Other methods for creating optical elements in a substrate include, for example and without limitation, mechanical engraving, laser ablation, electron beam direct writing, ion beam exposure, plasma etching, and direct chemical or laser etching.

Once formed, optical elements may have their reflectivity enhanced with reflective coatings such as, for example and without limitation, print materials, vacuum deposition layers, or liquid crystal layers.

The optical elements described herein may be formed on any suitable substrate. For embodiments comprising elements formed by the addition of material, the substrate may comprise any convenient surface suitable for the addition process and reflective material chosen. For example, substrates which may be usefully employed by printing a reflective lacquer may include, for example and without limitation, plastic, paper, glass or metal. For embodiments comprising elements formed by the removal of material, the substrate may comprise any convenient surface on which a surface relief can be formed, for example and without limitation, plastic, paper, glass or metal, but is preferably a plastic film or foil. Films such as polyethylene, polyimide, OPP, PET may be preferably used.

The dimensions of the optical elements and the spacing between them is preferably greater than those associated with diffraction effects so that dispersion color effects are limited. Diffraction effects can also be limited by creating some irregularity to the pattern of the multiple optical elements that form the three-dimensional image. The shape of the individual optical elements (e.g., groove or ridge edges) may be straight, curved, or irregular. Increasing the size of the optical elements eases some mass production problems. However, as the optical elements are increased in size, the fidelity of the resultant three-dimensional image is reduced. It has been found that optical elements having sizes of, without limitation, 2 to 5 microns are compatible with standard mass production techniques and are not limited to embossing or cast curing. For other applications such as print applications, the optical elements would be larger and would preferably have dedicated sizes and shapes to optimize the print quality commensurate with the specific print application.

Once formed, the optical elements may then be mass replicated by first replicating the surface of the substrate in nickel metal by means of electroforming. The nickel surface may then be used as a durable tool to replicate the relief surface in other substrates by means such as, for example and without limitation, embossing via heat and pressure, molding, casting, casting and cross-link curing or other such means.

An optical pattern or image may be designed to include pairs of optical elements of various shapes, sizes, degrees of symmetry, and formation process, each contributing its particular optical effect to the viewable image. Such elements may be formed in one or multiple passes, and in register or out of register.

Further, in all embodiments the orientation of the structure on the substrate surface can be varied to create gradual changes in the viewed image as a function of the positions of the light source and observer. In this way a small and local change can vary over a wide range of orientations creating a kinetic movement or animation effect.

By a combination of the multiple embodiments disclosed above, complex optical imagery may be produced precisely suited for use as high-security OVD's and security devices comprising such OVD's.

An adhesive layer may be present on either surface of the substrate as a means to attach the OVD to an article. It is also contemplated that a protective layer may be added.

It is also contemplated that any of the optical elements described herein may be employed in an OVD that is employed as part of a security device or an article comprising such a security device.

Security devices may be created by incorporating the OVD into a configuration that can be affixed to or embedded into an article to be authenticated. For example, and without limitation, the OVD can be incorporated into a security label, thread, patch, laminate or transfer film. Alternatively, the OVD may be formed directly into an article to be protected, such as the case with an optical disk.

Such security devices may then be affixed to or embedded into an article to be authenticated. End-users of the article may verify the authenticity of the article by examining the OVD and confirming that the predetermined optical pattern or image is present.

While specific embodiments of the disclosed concept have been described in detail, it will be appreciated by those skilled in the art that various modifications and alternatives to those details could be developed in light of the overall teachings of the disclosure. Accordingly, the particular arrangements disclosed are meant to be illustrative only and are limited only by the scope of the claims.

## Claims

1. An optically variable device comprising:
a substrate (1; 60; 70); and
a plurality of optical elements formed in or on the substrate (1; 60; 70) and being structured to provide a non-diffractive three-dimensional optical effect for a viewer when light is incident on the optical elements,
wherein the plurality of optical elements are arranged as a plurality of stereo pairs structured to reflect or refract light to corresponding focal points (4) in three-dimensional space apart from the optically variable device to form the three-dimensional optical effect,
wherein the optical elements include one or more optical elements (12; 22; 32; 42; 52; 62; 76, 77; 82) that are curved structures having a curvature that is either less than or greater than a semi-circle,
**characterised in that** the optical elements include one or more optical elements (82) having a micro-patterned surface (83) that causes at least a portion of the three-dimensional optical effect to include a color effect.

2. The optically variable device of claim 1, wherein the three-dimensional optical effect includes a first three-dimensional image that is visible to the viewer when the optically variable device is viewed from an angle of elevation within a first range of angles of elevation,
wherein the three-dimensional optical effect further includes a second three-dimensional image that is visible to the viewer when the optically variable device is viewed from an angle of elevation within a second range of angles of incidence at least a portion of which is different than the first range of angles of elevation.

3. The optically variable device of claim 1, wherein the three-dimensional optical effect includes one or more point images that change intensity when the substrate is rotated.

4. The optically variable device of claim 3, wherein the optical elements include one or more optical elements (52; 76, 77) that are asymmetric and have a non-uniform curvature.

5. The optically variable device of claim 1, wherein the micro-patterned surface (83) includes a plurality of parallel planes separated by regular or irregular distances in the normal direction.

6. The optically variable device of claim 1, wherein a width of each optical element is within a range of about 2 to about 5 µm.

## Patentansprüche

1. Optisch variable Vorrichtung, die aufweist:
ein Substrat (1; 60; 70); und
mehrere optische Elemente, die in oder auf dem Substrat (1; 60; 70) ausgebildet sind und strukturiert sind, um einen nicht diffraktiven dreidimensionalen optischen Effekt für einen Betrachter zu schaffen, wenn Licht auf die optischen Elemente fällt,
wobei die mehreren optischen Elemente als mehrere Stereopaare angeordnet sind, die strukturiert sind, um Licht zu entsprechenden Brennpunkten (4) in einem dreidimensionalen Raum abseits der optisch variablen Vorrichtung zu reflektieren oder zu brechen, um den dreidimensionalen optischen Effekt zu erzeugen,
wobei die optischen Elemente ein oder mehrere optische Elemente (12; 22; 32; 42; 52; 62; 76, 77; 82) enthalten, die gekrümmte Strukturen sind, die eine Krümmung aufweisen, die entweder kleiner als oder größer als ein Halbkreis ist,
**dadurch gekennzeichnet, dass** die optischen Elemente ein oder mehrere optische Elemente (82) mit einer mikrostrukturierten Oberfläche (83) enthalten, die bewirkt, dass wenigstens ein Teil des dreidimensionalen optischen Effektes einen Farbeffekt enthält.

2. Optisch variable Vorrichtung nach Anspruch 1, wobei der dreidimensionale optische Effekt ein erstes dreidimensionales Bild enthält, das für den Betrachter sichtbar ist, wenn die optisch variable Vorrichtung von einem Elevationswinkel innerhalb eines ersten Bereiches von Elevationswinkeln betrachtet wird,
wobei der dreidimensionale optische Effekt ferner ein zweites dreidimensionales Bild enthält, das für den Betrachter sichtbar ist, wenn die optisch variable Vorrichtung von einem Elevationswinkel innerhalb eines zweiten Bereiches von Einfallswinkeln betrachtet wird, von dem wenigstens ein Teil sich von dem ersten Bereich von Elevationswinkeln unterscheidet.

3. Optisch variable Vorrichtung nach Anspruch 1, wobei der dreidimensionale optische Effekt ein oder mehrere Punktbilder enthält, die die Intensität verändern, wenn das Substrat gedreht wird.

4. Optisch variable Vorrichtung nach Anspruch 3, wobei die optischen Elemente ein oder mehrere optische Elemente (52; 76, 77) enthalten, die unsymmetrisch sind und eine ungleichmäßige Krümmung aufweisen.

5. Optisch variable Vorrichtung nach Anspruch 1, wobei die mikrostrukturierte Oberfläche (83) mehrere parallele Ebenen enthält, die durch regelmäßige oder unregelmäßige Abstände in der Normalrichtung getrennt sind.

6. Optisch variable Vorrichtung nach Anspruch 1, wobei eine Weite jedes optischen Elementes in einem Bereich von etwa 2 bis etwa 5 µm liegt.

## Revendications

1. Dispositif à variabilité optique, comportant :
un substrat (1 ; 60 ; 70) ; et
une pluralité d'éléments optiques formés dans ou sur le substrat (1 ; 60 ; 70) et structurés pour créer un effet optique tridimensionnel non diffractif pour un observateur lorsque de la lumière frappe les éléments optiques,
la pluralité d'éléments optiques étant organisés sous la forme d'une pluralité de couples stéréoscopiques structurés pour réfléchir ou réfracter de la lumière vers des points de convergence correspondants (4) dans un espace à trois dimensions à l'écart du dispositif à variabilité optique afin de former l'effet optique tridimensionnel,
les éléments optiques comprenant un ou plusieurs éléments optiques (12 ; 22 ; 32 ; 42 ; 52 ; 62 ; 76 ; 77 ; 82) qui sont des structures courbes à courbure plus grande ou plus petite qu'un demi-cercle,
**caractérisé en ce que** les éléments optiques comprennent un ou plusieurs élément(s) optique(s) (82) à surface microtexturée (83) qui amène au moins une partie de l'effet optique tridimensionnel à comprendre un effet chromatique.

2. Dispositif à variabilité optique selon la revendication 1, dans lequel l'effet optique tridimensionnel comprend une première image en trois dimensions qui est visible par l'observateur quand le dispositif à variabilité optique est vu suivant un angle d'élévation compris dans un premier intervalle d'angles d'élévation,
l'effet optique tridimensionnel comprenant en outre une seconde image en trois dimensions qui est visible par l'observateur quand le dispositif à variabilité optique est vu suivant un angle d'élévation compris dans un second intervalle d'angles d'incidence dont au moins une partie est différence du premier intervalle d'angles d'élévation.

3. Dispositif à variabilité optique selon la revendication 1, dans lequel l'effet optique tridimensionnel comprend une ou plusieurs images ponctuelles qui changent d'intensité quand le substrat est amené à tourner.

4. Dispositif à variabilité optique selon la revendication 3, dans lequel les éléments optiques comprennent un ou plusieurs éléments optiques (52 ; 76 ; 77) qui sont asymétriques et ont une courbure non uniforme.

5. Dispositif à variabilité optique selon la revendication 1, dans lequel la surface microtexturée (83) comprend une pluralité de plans parallèles séparés dans la direction normale par des distances régulières ou irrégulières.

6. Dispositif à variabilité optique selon la revendication 1, dans lequel une largeur de chaque élément optique est d'environ 2 à environ 5 µm..
